# EUROPEAN PATENT APPLICATION

(11) **EP 3 474 165 A1**
(43) Date of publication of application: **24.04.2019**
(21) Application number: 17812941.7
(22) Date of filing: 06.03.2017
(51) Int. Cl.: G06F 17/50, G06F 17/30

(54) **DESIGN ASSISTANCE SYSTEM**

(30) Priority: 17.06.2016 JP 2016120849
(71) Applicant: Misumi Corporation, Bunkyo-ku Tokyo 112-8583 (JP)
(72) Inventor: HAMADA, Hiroyoshi, Tokyo 112-8583 (JP); MOTOHASHI, Masahiro, Tokyo 112-8583 (JP); KC, Saugat, Tokyo 1128583 (JP); CHIGIRI, Takashi, Tokyo 1128583 (JP)
(74) Representative: Viering, Jentschura & Partner mbB Patent- und Rechtsanwälte
(86) International application number: PCT/JP2017/008775
(87) International publication number: WO 2017/217032

(57) **Abstract**

When a display part to be set as a similar part search target is selected from among a plurality of display parts displayed on a design screen 26, an operation of selecting an executing button 104 for a single-part search is performed on a recommender execution selecting screen 100, and an operation of selecting a YES button 112 is performed on a search execution confirmation screen 110, the model number of the one display part being selected is extracted, a server 4 is accessed via the Internet 5, and similar part search data including the extracted model number is transmitted. A CPU 21 of the server 4 refers to similar part data stored in a memory 22, and retrieves similar part model numbers associated with the extracted model number. The part data of the extracted model number and the part data of all of the retrieved similar part model numbers are transmitted from the server 4 to a user terminal 3. A single-part search result detailed screen 120 displaying the model numbers of the respective parts is displayed on a display 11.

## Description

### [Technical Field]

The present invention relates to a design support system that supports design using computer-aided design (CAD) .

### [Background Art]

Three dimensional (3D) CAD systems and related systems have spread throughout the manufacturing industry, and there are several functions that are implemented as display functions of 3D CAD systems of various companies and whose usage by designers has been established. A function of automatically outputting a part table from the file name of assembly data is one of the functions. When a manufacturer model number is set to a part file name, and this function is used, an order can be placed directly by using the automatically output part table, so that good efficiency is achieved. Therefore, a designer sets a manufacturer model number to the file name of each part when creating assembly data constituted of a plurality of parts. Alternatively, there is a case where manufacturer model numbers are input to the properties of part files, and the part table is automatically output from the data. When a shape and a model number are corrected at a time that a part is changed, and the part table is output again, the part table for order placement is generated automatically, so that accurate data management and reliable order placement can be performed. With the spread of 3D CAD systems, a method of managing design data with 3D CAD data as a core has been established.

It often occurs in a design field that at a time of changing a part in 3D CAD data, only a shape is changed, changing a model number is omitted, and a wrong order is placed by using the wrong model number. A system for preventing this is a system Rapid Design inCAD Components provided by the applicant. In this system, when a designer changes data in a 3D CAD system, a model number automatically follows the change.

In addition, PTL 1 and PTL 2 propose automatic design of modules and units as an efficient design method using a design support system. As a background, there is a desire for efficient design and shorter design time in the design field. In addition, research has been conducted for many years into an image matching system that converts 3D CAD data into images from a few directions, and searches for similar 3D CAD data from the images (see NPL 1). In recent years, due to the evolution of hardware, the computation processing is completed in a realistic time, and is incorporated in commercial parts.

### [Citation List]

### [Patent Literature]

[PTL 1]
   Japanese Patent No. 4571998
[PTL 2]
   Japanese Patent No. 5591991

### [Non-Patent Literature]

[NPL 1]
D. Y. Chen, X. P. Tian, Y. T. Shen, and M. Ouhyoung, "On Visual Similarity Based 3D Model Retrieval," Computer Graphics Forum, vol. 22, no. 3, pp. 223-232, 2003

### [Summary]

### [Technical Problems]

At a time of product design or equipment design, a designer compares paper catalogs or websites of various companies for specification information of similar parts in order to select a suitable part, and takes a large amount of time to grasp the similar parts. A system that searches for part data of CAD of the user is considered as a system for solving this problem. As internal logic of the system, a system is considered which performs the search on the basis of degrees of shape similarity using an image matching technology or the like. However, the number of parts handled by the applicant alone is 80 sextillion (80 billion times 1 trillion). From a viewpoint of accuracy and processing time, there is a technological limit to processing performed merely by the image matching technology as in NPL 1 to perform shape searching of a part group of such a number of parts and achieve matching. A problem in the present situation is that similar parts that the user is searching for cannot be presented accurately and immediately as a result of a search by the user.

The present invention has been made in view of such a background. It is an object of the present invention to provide a design support system that can present similar parts or categories accurately and immediately, in which system the above-described custom of designers is used, when there is certain model number information in part data of CAD of the user, a similar part database is searched from the information, and when no model number information is obtained, shape matching of CAD data is performed.

### [Solution to Problems]

A design support system according to the present invention is a design support system for supporting design using a CAD system, the design support system including: a display unit configured to display a drawing for design according to CAD data; a similar part database configured to store similar part data associating a model number of a display part that is able to be displayed on the display unit as a part included in the drawing for design with a model number of a similar part to the display part; an operating input unit to which a selecting operation of selecting the display part included in the drawing for design, the drawing for design being displayed on the display unit, is input; a model number obtaining unit configured to obtain the model number of the display part selected by the selecting operation input to the operating input unit; and a similar part search unit configured to search the similar part database for the model number of the similar part corresponding to the model number of the display part, the model number of the display part being obtained by the model number obtaining unit, and displaying, on the display unit, the model number of the similar part, the model number of the similar part being included in a search result.

According to this configuration, the similar part database is searched for the model number of the similar part corresponding to the model number of the display part whose model number is extracted, and the model number of the similar part, the model number of the similar part being included in the search result, is displayed on the display unit. It is therefore possible to display an exact similar part. In addition, a user does not need to input the model number again, and the labor and time of the user can be reduced by automatically obtaining the model number from CAD data and making a proposal immediately.

In addition, preferably, the similar part data further associates the model number of the similar part with a category of the similar part, and the similar part search unit displays, on the display unit, the category of the similar part, the category of the similar part corresponding to the model number of the similar part, the model number of the similar part being included in the search result, in place of the model number of the similar part or together with the model number of the similar part.

According to this configuration, it is possible to grasp the category of the similar part, the category of the similar part corresponding to the model number of the similar part which model number is included in the search result.

Preferably, a shape obtaining unit configured to obtain a shape of the display part selected by the selecting operation input to the operating input unit is further provided, the similar part data further associates the model number of the similar part with a shape of the similar part, and the similar part search unit searches the similar part database for the shape of the similar part, the shape of the similar part matching the shape of the display part, the shape of the display part being obtained by the shape obtaining unit, and displays, on the display unit, the model number of the similar part, the model number of the similar part corresponding to the shape of the similar part, the shape of the similar part being included in a search result.

According to this configuration, the model number of the similar part can be displayed on the display unit on the basis of the shape of the display part.

In addition, preferably, the similar part data further associates the model number of the similar part with a category of the similar part, a category identifying unit configured to identify the category of the similar part is further included, and the similar part search unit searches the similar part database for the shape of the similar part, the shape of the similar part matching the shape of the display part, the shape of the display part being obtained by the shape obtaining unit from among shapes of similar parts corresponding to the category of the similar part, the category of the similar part being identified by the category identifying unit, and displays, on the display unit, the model number of the similar part, the model number of the similar part corresponding to the shape of the similar part, the shape of the similar part being included in a search result.

According to this configuration, the shape of the similar part which shape matches the shape of the display part is retrieved from among the shapes of similar parts corresponding to the identified category of the similar part. Thus, a load at a time of the search can be reduced as compared with retrieving the shape of the similar part which shape matches the shape of the display part from among shapes of all of similar parts within the similar part data.

Further, preferably, a category identifying operation identifying the category of the similar part is further input to the operating input unit, and the category identifying unit identifies the category of the similar part according to the category identifying operation input to the operating input unit.

According to this configuration, the category of the similar part can be identified easily by merely inputting the category identifying operation identifying the category of the similar part to the operating input unit.

In addition, preferably, the similar part database further stores similar part category data associating a category of the display part with the category of the similar part, the model number obtaining unit obtains the category of the display part selected by the selecting operation input to the operating input unit, and the category identifying unit searches the similar part database for the category of the similar part, the category of the similar part corresponding to the category of the display part, the category of the display part being obtained by the model number obtaining unit, and identifies the category of the similar part from a search result.

According to this configuration, the category of the similar part can be identified easily by merely selecting the display part whose category is obtained.

Further, preferably, the CAD data includes character string data identifying the display part included in the drawing for design, and for the display part selected by the selecting operation input to the operating input unit, the model number obtaining unit obtains, as the model number of the display part, an extracted character string extracted from the character string data identifying the display part according to a specific rule, and when the extracted character string does not satisfy a character string format that is able to be taken by the model number of the display part, a model number setting screen prompting for setting the character string data is displayed on the display unit.

According to this configuration, a load at a time of the search can be reduced as compared with a system obtaining the model number of the display part which model number does not satisfy the character string format that can be taken by the model number of the display part, and searching for the similar part.

In addition, preferably, the similar part data associates the model number of the similar part with a plurality of pieces of specification information of the similar part, and the similar part search unit displays, for each similar part, the plurality of pieces of specification information of the similar part, the plurality of pieces of specification information of the similar part corresponding to the model number of the similar part, the model number of the similar part being included in the search result, alongside names of the plurality of pieces of specification information on the display unit.

According to this configuration, it is possible to immediately present, for each similar part, a plurality of specifications of the similar part to the user, and thus shorten design time.

The design support system preferably further includes: a similar part selecting operating input unit to which a similar part selecting operation of selecting the model number of the similar part is input, the model number of the similar part being included in the search result of the similar part search unit and being displayed on the display unit; and a replacing unit configured to replace, on the CAD data, the display part selected by the selecting operation input to the operating input unit with the similar part corresponding to the model number selected by the similar part selecting operation input to the similar part selecting operating input unit.

According to this configuration, the display part can be easily replaced with the similar part on the CAD data.

In addition, preferably, the model number obtaining unit obtains model numbers of all display parts included in the drawing for design, the drawing for design being displayed on the display unit, and the similar part search unit searches the similar part database for model numbers of similar parts corresponding to the model numbers of all of the display parts, the model numbers of all of the display parts being obtained by the model number obtaining unit, and displays, on the display unit, the model numbers of the similar parts, the model numbers of the similar parts being included in a search result.

According to this configuration, it is possible to display, on the display unit, the model numbers of the similar parts corresponding to the model numbers of all of the display parts included in the drawing for design, the drawing for design being displayed on the display unit.

Further, preferably, when the display part selected by the selecting operation input to the operating input unit is a coupled part, the model number obtaining unit obtains the model number of the display part and a model number of another display part coupled to the display part, and displays the model number of the display part and the model number of the other display part on the display unit.

According to this configuration, it is possible to retrieve a similar part to the other display part coupled to the display part for which a similar part is retrieved.

In addition, preferably, when the similar part search unit performs a search with respect to the same display part, the similar part search unit changes numerical values of a plurality of specifications indicating part information, and performs a re-search.

According to this configuration, a desired search result can be obtained by changing the numerical values of the specifications at the time of the search.

### [Brief Description of Drawings]

FIG. 1 is a block diagram of a design support system according to a present embodiment.
FIG. 2 is a diagram of assistance in explaining a design screen displaying a design drawing.
FIG. 3 is a diagram of assistance in explaining a setting screen.
FIG. 4 is a diagram of assistance in explaining a recommender execution selecting screen.
FIG. 5 is a diagram of assistance in explaining a search execution confirmation screen.
FIG. 6 is a diagram of assistance in explaining a model number setting screen.
FIG. 7 is a diagram of assistance in explaining the recommender execution selecting screen in a state in which detailed display of a single-part search result is selectable.
FIG. 8 is a diagram of assistance in explaining a single-part search result detailed screen.
FIG. 9 is a diagram displaying an electronic E-catalog of a part.
FIG. 10 is a diagram of assistance in explaining the single-part search result detailed screen in a state in which a re-search button is selected.
FIG. 11 is a diagram of assistance in explaining a drawing-part search confirmation screen.
FIG. 12 is a diagram of assistance in explaining a confirmation screen.
FIG. 13 is a diagram of assistance in explaining a shape matching part display confirmation screen.
FIG. 14 is a diagram of assistance in explaining a drawing-part search result detailed screen.
FIG. 15 is a diagram of assistance in explaining a narrowed-down screen.
FIG. 16 is a diagram of assistance in explaining a model number following detailed screen.
FIG. 17 is a diagram of assistance in explaining a drawing-part search history screen.
FIG. 18 is a diagram of assistance in explaining an all-part search result detailed screen.
FIG. 19 is a diagram of assistance in explaining the design screen displaying the design drawing in an enlarged state with a search target part at a center as a state of selecting the search target part.
FIG. 20 is a diagram of assistance in explaining a selected display part and coupled display parts in a third embodiment in which similar parts to the coupled display parts are also retrieved and displayed.
FIG. 21 is a diagram of assistance in explaining a similar part to the selected display part and similar parts to the coupled display parts in the third embodiment as one unit.
FIG. 22 is a diagram of assistance in explaining a recommender execution selecting screen according to a fourth embodiment, which screen displays the model number of a selected display part.
FIG. 23 is a diagram of assistance in explaining the recommender execution selecting screen in a state in which a display part in the fourth embodiment is selected.
FIG. 24 is a diagram of assistance in explaining the recommender execution selecting screen in a state in which there are no similar parts to the display part selected in the fourth embodiment.
FIG. 25 is a diagram of assistance in explaining the recommender execution selecting screen in a state in which an unnecessary portion of a model number in the fourth embodiment is deleted.
FIG. 26 is a diagram of assistance in explaining a category selecting screen according to the fourth embodiment.
FIG. 27 is a diagram of assistance in explaining a search result detailed screen according to a fifth embodiment, in which specifications of a part are changed at a time of a re-search, and the re-search is performed.
FIG. 28 is a diagram of assistance in explaining a re-search specification setting screen according to the fifth embodiment.
FIG. 29 is a diagram of assistance in explaining a search result detailed screen according to a sixth embodiment in which similar part sections are scrolled.

### [Description of Embodiments]

### [First Embodiment]

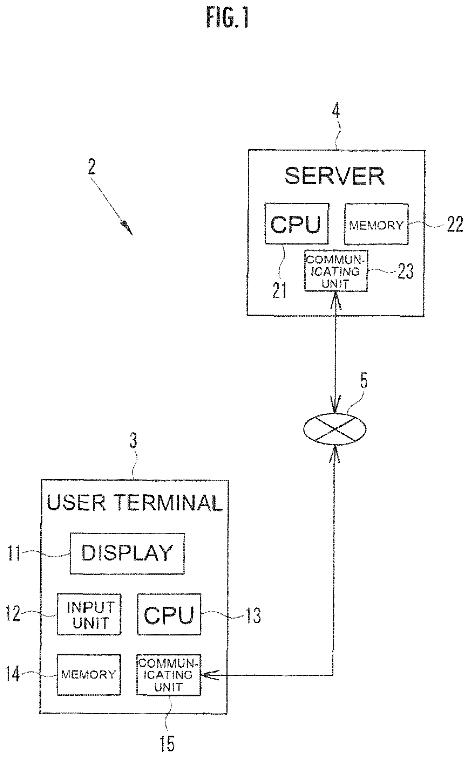

As shown in FIG. 1, a design support system 2 in which the present invention is carried out includes a server 4 connected to a user terminal 3. The user terminal 3 and the server 4 are communicatably connected to each other via the Internet 5, for example.

The user terminal 3 is constituted of a personal computer (PC) unit. The user terminal 3 includes a display 11 (display unit), an input unit 12 (operating input unit) constituted of a keyboard, a mouse, and the like, a central processing unit (CPU) 13, a memory 14, and a communicating unit 15.

The server 4 includes a CPU 21, a memory 22 (similar part database), and a communicating unit 23. The memory 22 stores similar part data associating the model numbers of various parts with the model numbers of similar parts to the respective parts and similar part category data associating categories (for example, a shaft holder, a shaft, and the like) to which the model numbers of the respective parts belong with categories to which the model numbers of the similar parts to the respective parts belong. The similar part data includes 3D CAD data, shape data, and specification (for example, material, presence or absence of heat treatment and a treatment method, presence or absence of surface treatment and a treatment method, and the like) data of the respective parts and the similar parts and E-catalog data including image data, introducing comments, and the like of the respective parts and the similar parts. Incidentally, the similar parts include parts whose specifications perfectly coincide with those of the target parts, parts whose shapes coincide with those of the target parts but whose surface treatment or the like is different, parts whose shapes are slightly different from the target parts, and the like. The similar parts are associated with the respective parts in advance. The associations of the similar parts can be changed as appropriate, and are, for example, updated at intervals of six months or when a new product is released.

The communicating unit 15 of the user terminal 3 and the communicating unit 23 of the server 4 are communicatably connected to each other via the Internet 5. Incidentally, the user terminal 3 and the server 4 may be connected to each other without the intervention of the Internet, and may, for example, be connected to each other by an intranet such as an in-house local area network (LAN) system or the like. In addition, the user terminal 3 may be provided with functions of the server 4.

The memory 14 of the user terminal 3 stores a CAD system used when a user makes design. The user starts this CAD system and makes design. The memory 14 also stores a design support program for performing design support when the user starts the CAD system and makes design.

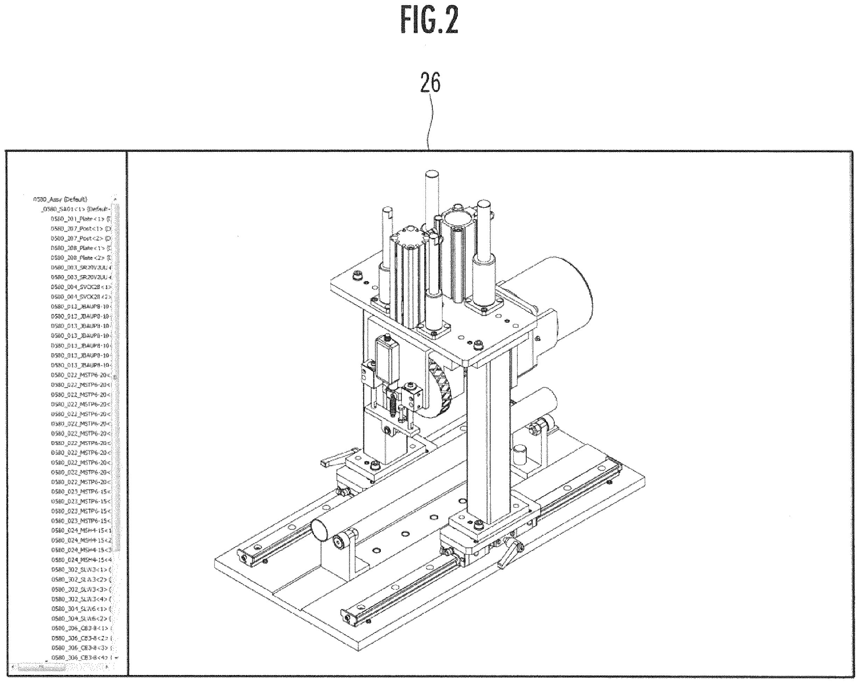

As shown in FIG. 2, when the CAD system is started and a file of an assembly is opened, the CPU 13 of the user terminal 3 displays a design screen 26 on the display 11. The design screen 26 displays a design drawing (drawing for design) of the assembly constituted of various parts. The user makes design by operating the input unit 12.

### [Provision of Model Numbers]

Each part is given a model number indicating an attribute of the part.

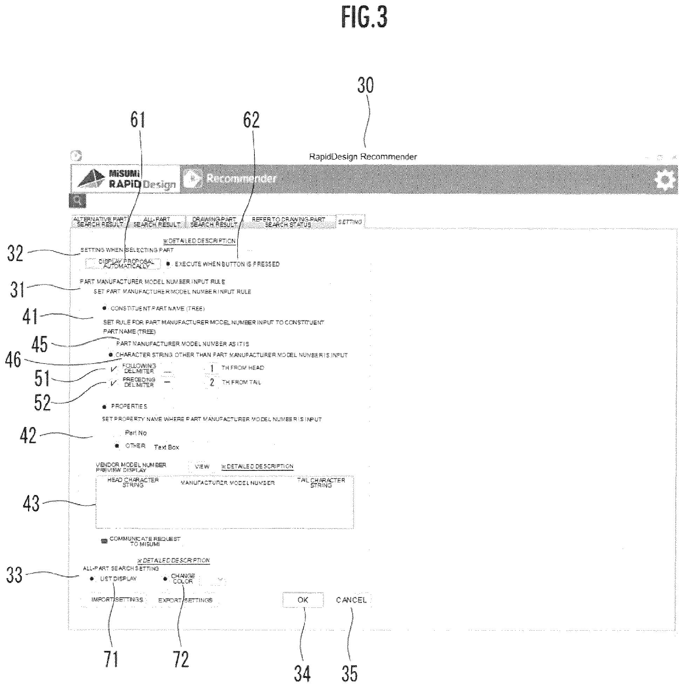

As shown in FIG. 3, when a model number indicating an attribute of a part is given to the part, the CPU 13 starts the design support program, and displays a setting screen 30 on the display 11.

The setting screen 30 displays a part manufacturer model number input rule section 31, a setting section 32 when selecting a part, an all-part search setting section 33, an OK button 34, and a canceling button 35.

The part manufacturer model number input rule section 31 displays a constituent part name setting section 41, a property setting section 42, and a vendor model number preview display section 43. The constituent part name setting section 41 displays, as a rule of part manufacturer model numbers, a comment 45 that a part manufacturer model number is input as it is as the model number of a part and a comment 46 that a character string other than the part manufacturer model number is input.

Displayed below the comment 46 are a first rule setting section 51 constituted of a check box, characters "delimiter," an input box, characters "from head," an input box, and characters "th" and a second rule setting section 52 constituted of a check box, characters "delimiter," an input box, characters "from tail," an input box, and characters "th." The first and second rule setting sections 51 and 52 are provided to set a rule for extracting a part manufacturer model number from an input model number (character string data) of a part in a case where a character string other than the part manufacturer model number is input as the model number of the part (for example, AAA_ATHC3-BBB-CCC). The first rule setting section 51 sets a rule (specific rule) indicating that a delimiter (for example, "_" (underscore) or the like) is input, and indicating the ordinal position of the delimiter from the head which delimiter is followed by characters extracted as a part manufacturer model number. In addition, the second rule setting section 52 sets a rule (specific rule) indicating that a delimiter (for example, "-" or the like) is input, and indicating the ordinal position of the delimiter from the tail which delimiter is preceded by the characters extracted as the part manufacturer model number. It is to be noted that the above-described rules are an example.

In the present embodiment, a check box on the side of characters "constituent part name (tree)" of the constituent part name setting section 41 is checked, and a check box on the side of the comment 46 is checked. In addition, the check box of the first rule setting section 51 is checked, "_" is input to the input box on the left side, and "1" is input to the input box on the right side. Further, the check box of the second rule setting section 52 is checked, "-" is input to the input box on the left side, and "2" is input to the input box on the right side.

In addition, in the present embodiment, a check box on the left side of "other" in the property setting section 42 is checked, and "TextBox" is input to an input box on the right side of the "other." In a case where data of the model numbers of parts is input (stored) in TextBox of the memory 14, "TextBox" is input to the input box to read the data from TextBox.

For a part for which AAA_ATHC3-BBB-CCC, for example, is input as the model number of the part, "ATHC3-BBB-CCC" following the first delimiter _ from the head is extracted according to the rule of the first rule setting section 51, and "AAA_ATHC3" preceding the second delimiter - from the tail is extracted according to the rule of the second rule setting section 52. "ATHC3," which is a character string satisfying the respective rules of the first and second rule setting sections 51 and 52, is extracted as a part manufacturer model number.

In addition, the part manufacturer model number is not extracted when a character string without a delimiter, for example, is input as the model number of the part. Further, in a case where the check box of the first rule setting section 51 is checked, "following the first delimiter - from the head" is set, the check box of the second rule setting section 52 is checked, and "preceding the first delimiter _ from the tail" is set, "BBB-CCC" is extracted according to the rule of the first rule setting section 51, and "AAA" is extracted according to the rule of the second rule setting section 52. There is no character string satisfying the respective rules of the first and second rule setting sections 51 and 52. Thus, the part manufacturer model number is not extracted. Similarly, in a case where there is no character string in a part following the rules, the part manufacturer model number is not extracted.

The vendor model number preview display section 43 displays the model number of the display part whose model number is extracted. The vendor model number preview display section 43 is divided into a head character string section, a manufacturer model number section, and a tail character string section. In the present embodiment, the head character string section displays the character string (AAA) preceding the first delimiter _ from the head, the manufacturer model number section displays the extracted model number (ATHC3), and the tail character string section displays the character string (BBB-CCC) in the rear of the second delimiter - from the tail.

The setting section 32 when selecting a part is a section for making a setting as to whether to perform a similar part search for a part being selected automatically or manually. The setting section 32 displays a comment 61 that the similar part search is performed automatically and a comment 62 that the similar part search is performed manually. In the present embodiment, a check box on the side of the comment 62 that the similar part search is performed manually is checked.

The all-part search setting section 33 displays a comment 71 as to whether or not to perform list display of similar parts retrieved when an all-part search to be described later in detail is performed and a comment 72 as to whether or not to change the display color of display parts for which the similar parts are retrieved. In the present embodiment, a check box on the side of the comment 71 is checked, a check box on the left side of the comment 72 is checked, and a desired display color (for example, red) is selected in a display color selecting box on the right side of the comment 72.

When the user performs an operation of selecting (clicking) the OK button 34 on the setting screen 30, the input rules are determined, and the settings are saved. When the user performs an operation of selecting the canceling button 35, the input is canceled.

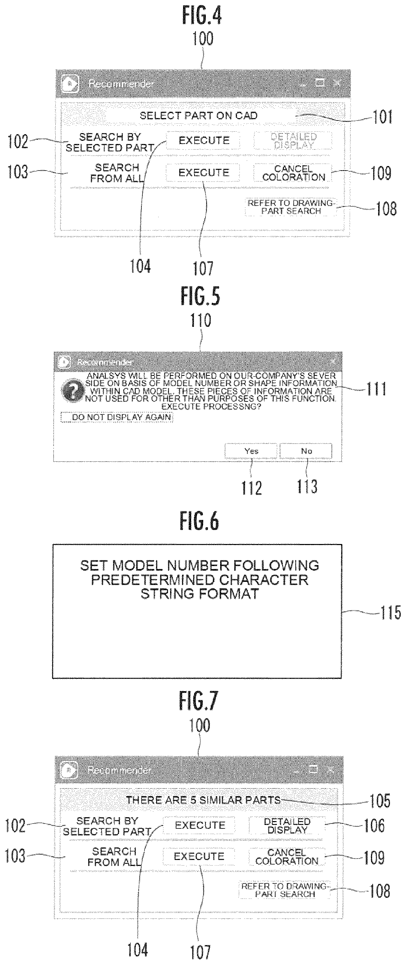

As shown in FIG. 4, when the design support program is started, the CPU 13 displays, on the display 11, a recommender execution selecting screen 100 for selecting whether or not to display similar parts to each part displayed on the design screen 26, as design support for each part.

The recommender execution selecting screen 100 displays: a message 101 "select part on CAD"; a single-part search comment 102 for executing a "single-part search mode" in which similar parts to one display part selected from among a plurality of display parts displayed on the design screen 26 are retrieved and displayed; and an all-part search comment 103 for executing an "all-part search mode" in which similar parts to all of the plurality of display parts are retrieved and displayed.

### [Single-Part Search Mode]

Description will be made of a flow of processing when similar parts are retrieved and displayed by executing the single-part search mode. In a case where the single-part search mode is executed, the user operates the input unit 12 to select a display part to be set as a similar part search target from among the plurality of display parts displayed on the design screen 26, and select an execution button 104 for a single-part search, the execution button 104 being displayed on the side of the single-part search comment 102 on the recommender execution selecting screen 100.

When the user performs an operation of selecting the execution button 104 for a single-part search, the CPU 13 of the user terminal 3 displays a search execution confirmation screen 110 on the display 11, as shown in FIG. 5. The search execution confirmation screen 110 displays a confirmation message 111 as to whether or not to execute a search, a YES button 112, and a NO button 113.

When the user performs an operation of selecting the YES button 112 on the search execution confirmation screen 110, the CPU 13 extracts and obtains the model number of one display part being selected. When the user performs an operation of selecting the NO button 113, the single-part search mode is ended. Incidentally, when a check box displayed on the side of a comment that "do not display again" is checked, the search execution confirmation screen 110 is not displayed hereafter. In the present embodiment, the CPU 13 corresponds to "a model number obtaining unit".

When the CPU 13 obtains the model number of the display part being selected, the CPU 13 determines whether or not the model number that is obtained (hereinafter referred to as the obtained model number) satisfies a predetermined character string format that can be taken by the model number of the display part. When the CPU 13 determines that the obtained model number does not satisfy the predetermined character string format, the CPU 13 displays a model number setting screen 115 on the display 11, the model number setting screen 115 prompting for setting a model number following the predetermined character string format to the display part, as shown in FIG. 6. Incidentally, the model number setting screen 115 may not be displayed.

When the CPU 13 determines that the obtained model number satisfies the predetermined character string format, the CPU 13 accesses the server 4 via the Internet 5, and transmits similar part search data for retrieving similar parts of the obtained model number, the similar part search data including data of the obtained model number. When the CPU 21 of the server 4 receives the similar part search data, the CPU 21 refers to the similar part data stored in the memory 22, and retrieves the model numbers of similar parts (which model numbers will hereinafter be referred to as similar part model numbers) associated with the obtained model number.

When the similar part model numbers are retrieved, part data of the obtained model number and part data of all of the retrieved similar part model numbers are transmitted from the server 4 to the user terminal 3. As shown in FIG. 7, the CPU 13 of the user terminal 3 displays a message 105 that "there are 5 similar parts" on the recommender execution selecting screen 100 on the basis of the number of retrieved similar part model numbers (for example, five).

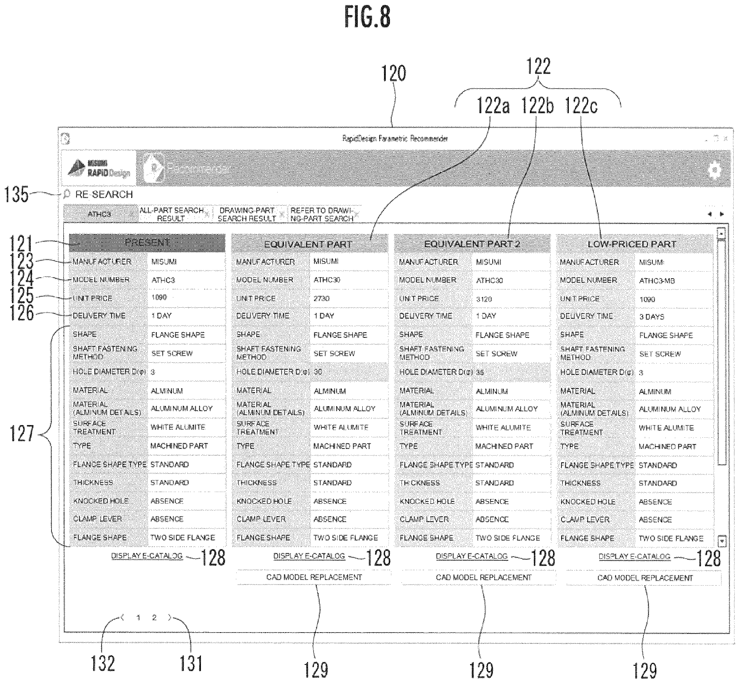

When the message 105 that "there are 5 similar parts" is displayed on the recommender execution selecting screen 100, a detailed display button 106 of the single-part search comment 102 that "search by selected part" becomes selectable. When the user performs an operation of selecting the detailed display button 106, the CPU 13 displays a single-part search result detailed screen 120 on the display 11 on the basis of the received part data, as shown in FIG. 8. In the present embodiment, the CPU 13 of the user terminal 3 and the CPU 21 of the server 4 constitute "a similar part search unit."

The single-part search result detailed screen 120 displays a present section 121 that displays therebelow information regarding the display part selected at a time of the execution of the search and a similar part section 122 that displays therebelow information regarding a similar part. Each of the sections 121 and 122 displays a manufacturer name item 123 displaying a manufacturer name, a model number item 124 displaying a model number, a unit price item 125 displaying a unit price, a delivery time item 126 displaying a delivery time, and specification items 127 displaying specification information. Incidentally, the unit price item 125, the delivery time item 126, and the specification items 127 may not be displayed. In addition, a category of the selected display part and the similar parts may be displayed in place of or in addition to the model numbers of the parts.

A plurality of specification items 127 are set for each part. In a case of a shaft holder, for example, the following are set as the specification items 127: a shape, a shaft fastening method, a hole diameter D (ϕ), a material, a material [aluminum details], a surface treatment, a type, a kind of flange shape, a thickness, a knocked hole, a clamp lever, and a flange shape. Incidentally, characters within [] of the material [aluminum details] change according to the material displayed in the material item immediately above.

When a plurality of similar parts are retrieved, a plurality of similar part sections 122 are provided, and the following are displayed as the similar part sections 122: an equivalent part section 122a and an equivalent part 2 section 122b of parts equivalent to the part displayed in the present section 121 (selected display part), a low-priced part section 122c of a low-priced part as compared with the parts displayed in the equivalent part section 122a and the equivalent part 2 section 122b, and the like.

The specification items 127 of the respective sections 122a to 122c are displayed so as to correspond to the specification items 127 of the present section 121. When data corresponding to each item of the specification items 127 in the present section 121 is not included in the data of the similar parts displayed in the respective sections 122a to 122c, for example, the corresponding items of the specification items 127 in the respective sections 122a to 122c are left blank.

Incidentally, in a case where the material item, for example, in the specification items 127 of the present section 121 displays "C3 material: SUJ2," which is information given an item number at the head thereof, the material items of the specification items 127 in the respective sections 122a to 122c display information given the same item number (C3) (for example, C3 surface treatment: none) even when the material items do not indicate the material.

In addition, when item numbers not given to respective items of the specification items 127 in the present section 121 are given to respective items of the specification items 127 in the sections 122a to 122c, the information is displayed below the specification items 127.

Each of the sections 121 and 122a to 122c is provided with an E-catalog button 128 for displaying an E-catalog (electronic catalog) of the displayed part on another screen (browser). Each of the sections 122a to 122c of the similar parts is provided with a CAD model replacing button 129 for replacing the part displayed in the present section 121 with the displayed similar part.

The single-part search result detailed screen 120 can display sections for four parts including the present section 121 on one page. In a case where there are four or more similar parts, a plurality of pages are generated. The single-part search result detailed screen 120 displays a page forward button 131 and a page return button 132 for changing a displayed page. When the user performs an operation of selecting the page forward button 131 in a state in which page 1 is displayed, for example, page 1 is changed to page 2. When the user performs an operation of selecting the page return button 132 in a state in which page 2 is displayed, page 2 is changed to page 1. Incidentally, the present section 121 is provided to all pages. That is, each page has a maximum of three similar part sections.

Incidentally, when a display part is selected, the single-part search result detailed screen 120 may be automatically displayed on the display 11 without the recommender execution selecting screen 100 and the search execution confirmation screen 110 being displayed. This change is effected when the user checks a check box on the side of the comment 61 for automatic execution on the setting screen 30 (see FIG. 3). When the user checks the check box on the side of the comment 61 for automatic execution, the CPU 13 of the user terminal 3 displays, on the display 11, a screen describing a message that "when 'display proposal automatically' is selected, similar parts are automatically retrieved at a time of selection of a part on CAD." This screen disappears after a predetermined operation or after the passage of a predetermined time.

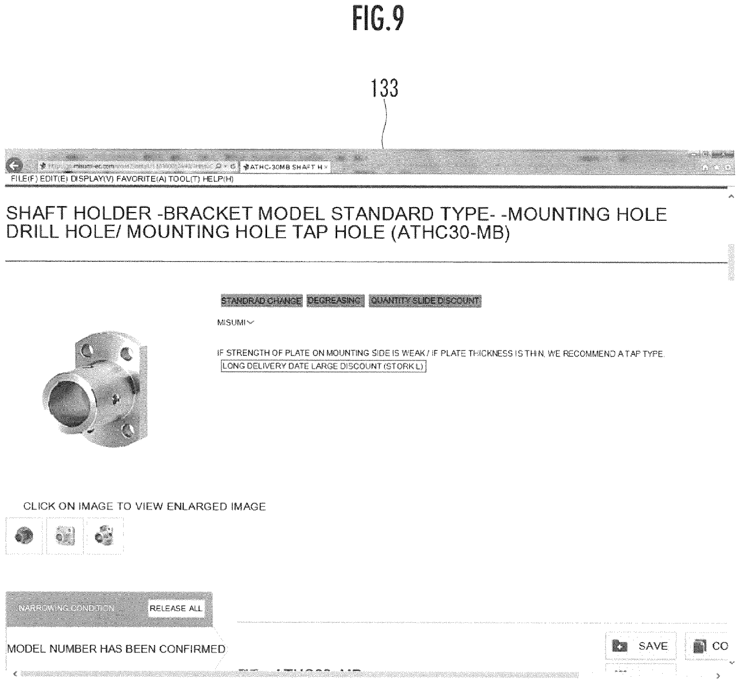

When the user performs an operation of selecting an E-catalog button 128 on the single-part search result detailed screen 120, the CPU 13 of the user terminal 3 accesses the server 4 via the Internet 5, and transmits part information search data including the corresponding part model number (the display part model number or a similar part model number). When the CPU 21 of the server 4 receives the part information search data, the CPU 21 refers to the similar part data stored in the memory 22, searches for the corresponding part model number, and transmits the E-catalog data of the searched-for part model number to the user terminal 3. As shown in FIG. 9, the CPU 13 of the user terminal 3 displays the received E-catalog of the part by a browser 133. Incidentally, the E-catalog data may be transmitted at the same time as the transmission of the part data of the obtained model number and the part data of all of the retrieved similar part model numbers from the server 4 to the user terminal 3.

When the user performs an operation of selecting a CAD model replacing button 129 (see FIG. 8) on the single-part search result detailed screen 120, the CPU 13 displays (substitutes) the corresponding similar part as a part on CAD in place of the part displayed in the present section 121. At this time, the substitution is performed such that a central portion of an end side of the part is aligned. Incidentally, a reference point at the time of the substitution can be changed as appropriate.

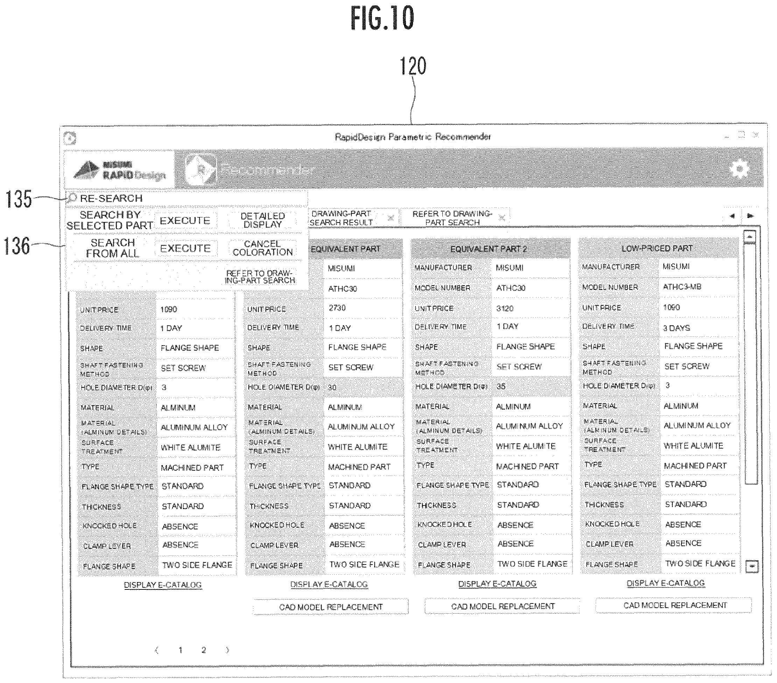

As shown in FIG. 8, the single-part search result detailed screen 120 displays a re-search button 135 to be selected when the "all-part search mode" to be described later in detail is executed as a re-search. When the user performs an operation of selecting the re-search button 135, the CPU 13 displays a re-search screen 136 for performing a re-search such that the re-search screen 136 is superimposed on the single-part search result detailed screen 120, as shown in FIG. 10. The re-search screen 136 displays the same comments as the recommender execution selecting screen 100.

### [Drawing-Part Search Based on Part Shape]

Description will next be made of a case where no similar parts are retrieved in the single-part search mode, and a drawing-part search based on a part shape is performed.

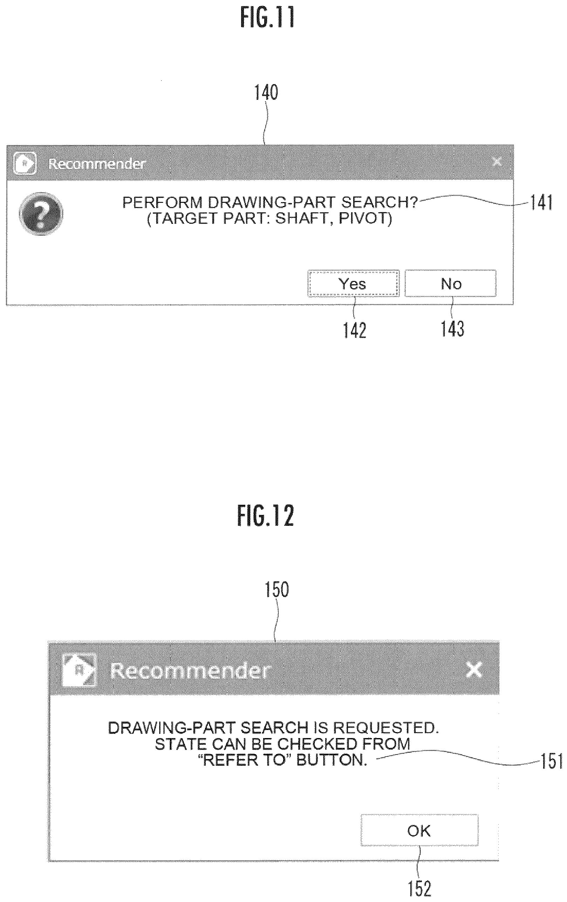

When no similar part model numbers are retrieved by the CPU 21 of the server 4 in the single-part search mode, similar part model number absence data indicating that no similar parts are retrieved is transmitted from the server 4 to the user terminal 3. In response to reception of the similar part model number absence data, the CPU 13 of the user terminal 3 displays a drawing-part search confirmation screen 140 on the display 11 separately from the recommender execution selecting screen 100, as shown in FIG. 11.

The drawing-part search confirmation screen 140 displays a confirmation message 141 as to whether or not to perform a drawing-part search, a YES button 142, and a NO button 143. The confirmation message 141 differs depending on the kind of the display part as a target of a search for similar parts. In the present embodiment, description will be made of a case where the display part as a similarity search target is a shaft. The confirmation message 141 is displayed to the effect that shafts and pivots similar to shafts are set as search targets.

When the user performs an operation of selecting the YES button 142 on the drawing-part search confirmation screen 140, the CPU 13 obtains the shape of one display part being selected, and transmits drawing-part search execution data including data of the obtained shape and search targets (shafts and pivots) to the server 4. Incidentally, the drawing-part search is ended when the user performs an operation of selecting the NO button 143.

In addition, after sending the drawing-part search execution data to the server 4, the CPU 13 displays a confirmation screen 150 on the display 11, as shown in FIG. 12. The confirmation screen 150 displays a message 151 indicating that the state of the drawing-part search can be checked and an OK button 152. The confirmation screen 150 disappears when the user performs an operation of selecting the OK button 152.

When the CPU 21 of the server 4 receives the drawing-part search execution data, the CPU 21 refers to data of the search targets (shafts and pivots) in the similar part data stored in the memory 22, extracts similar parts having shape data similar to the shape data included in the drawing-part search execution data by well-known shape matching, and retrieves the model numbers (hereinafter, shape matching model numbers) of the similar parts. Parts determined to have a matching rate equal to or higher than a certain matching rate by shape matching are retrieved as similar parts.

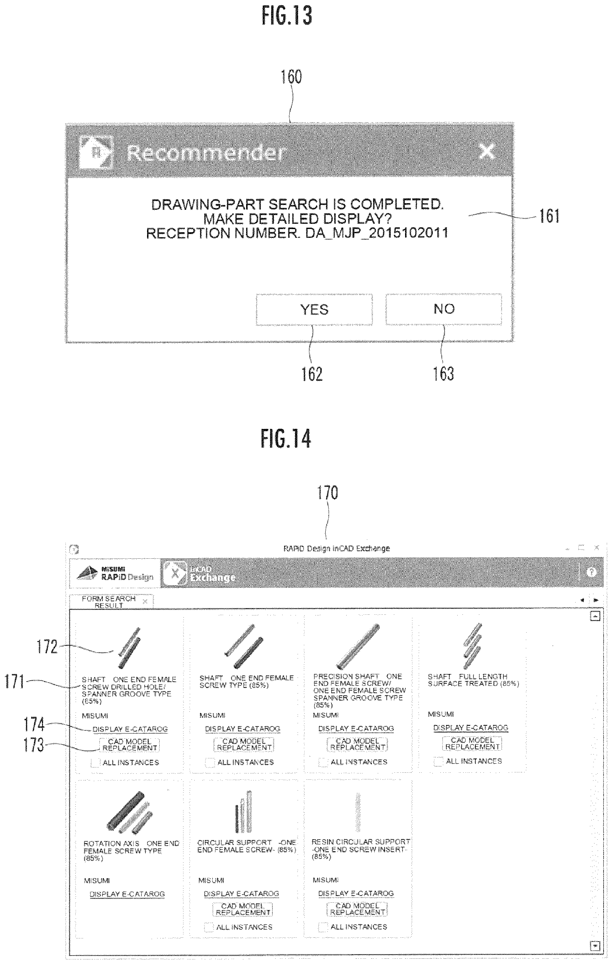

When the shape matching model numbers are retrieved, the part data of the retrieved shape matching model numbers is transmitted from the server 4 to the user terminal 3. When the CPU 13 of the user terminal 3 receives the part data of the shape matching model numbers, the CPU 13 displays a shape matching part display confirmation screen 160 on the display 11, as shown in FIG. 13. The shape matching part display confirmation screen 160 displays a confirmation message 161 as to whether or not to make detailed display of the shape matching parts, a YES button 162, and a NO button 163.

When the user performs an operation of selecting the YES button 162 on the shape matching part display confirmation screen 160, the CPU 13 displays a drawing-part search result detailed screen 170 on the display 11, as shown in FIG. 14.

The drawing-part search result detailed screen 170 displays a category section 171 displaying a category (shaft, pivot, screw, gear, or the like) of a part and a matching rate between the part and the selected display part, an image display section 172 displaying image data of the retrieved similar part model number, a CAD model replacing button 173 for replacing the selected display part with the similar part, and an E-catalog button 174 for displaying an E-catalog of the displayed similar part. The function of the E-catalog button 174 and processing at a time of selection of the E-catalog button 174 are the same as in the single-part search mode. Incidentally, the drawing-part search is ended when the user performs an operation of selecting the NO button 163 on the shape matching part display confirmation screen 160.

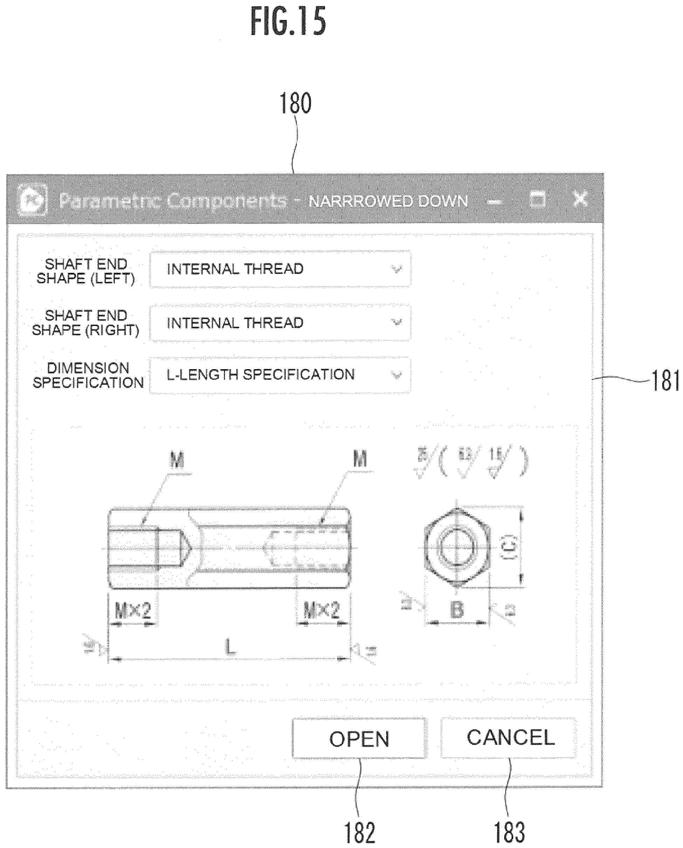

When the user performs an operation of selecting the CAD model replacing button 173 on the drawing-part search result detailed screen 170, the CPU 13 displays a narrowed-down screen 180 of the corresponding similar part on the display 11, as shown in FIG. 15. The narrowed-down screen 180 displays detail information 181 regarding the similar part, an opening button 182, and a canceling button 183. In the case where the similar part is a shaft, for example, the detail information 181 regarding the similar part displays a left and a right shaft end shape (an internal thread, an external thread, a recessed portion, or the like) and dimension specifications.

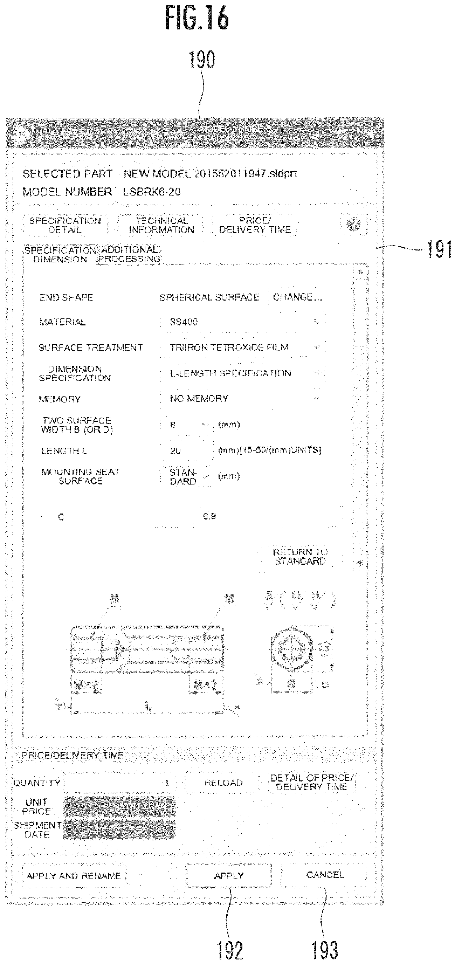

When the user performs an operation of selecting the opening button 182 on the narrowed-down screen 180, the CPU 13 displays, on the display 11, a model number following detailed screen 190 following the model number of the corresponding similar part, as shown in FIG. 16. The model number following detailed screen 190 displays information 191 more detailed than the detail information 181, an applying button 192, and a canceling button 193. Incidentally, the drawing-part search is ended when the user performs an operation of selecting the canceling button 183 on the narrowed-down screen 180.

When the user performs an operation of selecting the applying button 192 on the model number following detailed screen 190, the CPU 13 displays (substitutes) the similar part as a part on CAD in place of the display part being selected. A result of the drawing-part search is stored in the memory 14 as a history file including a search start date and time, a search source model file, and a status. Incidentally, the drawing-part search is ended when the user performs an operation of selecting the canceling button 193 on the model number following detailed screen 190.

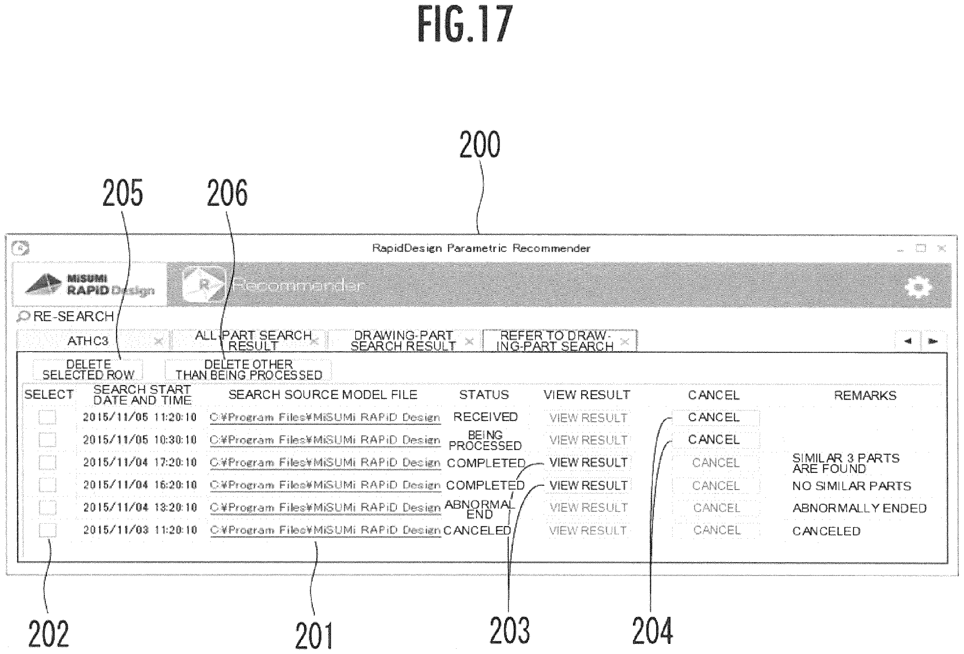

When the user performs an operation of selecting a drawing-part search reference button 108 (see FIG. 4) displayed on the recommender execution selecting screen 100, the CPU 13 searches the memory 14, and displays a drawing-part search history screen 200 on the display 11, as shown in FIG. 17.

The drawing-part search history screen 200 displays a history section 201 displaying search start dates and times, search source model files, and statuses as histories of the drawing-part search performed in the past, a selecting check box section 202 for selecting each history, result display buttons 203, canceling buttons 204, a selected row deleting button 205, and an other-than-being-processed deleting button 206.

When the user checks a check box for details of a result of the drawing-part search which details the user desires to display among a plurality of check boxes in the selecting check box section 202, and the user performs an operation of selecting the corresponding result display button 203, the CPU 13 displays a drawing-part search result detailed screen 170 (see FIG. 14) on the display 11.

When the user checks a check box that the user desires to cancel among the plurality of check boxes in the selecting check box section 202, and the user performs an operation of selecting the corresponding canceling button 204, the CPU 13 cancels the operation, and changes the status to a canceled status. Incidentally, the result display buttons 203 and the canceling buttons 204 are displayed and allowed to be selected only for histories whose results can be displayed and which can be canceled.

When the user checks a check box of a history that the user desires to delete among the plurality of check boxes in the selecting check box section 202, and the user performs an operation of selecting the selected row deleting button 205, the CPU 13 deletes the selected history. In addition, when the user performs an operation of selecting the other-than-being-processed deleting button 206, the CPU 13 deletes histories other than a history in which "being processed" is displayed as a status.

When the user displays the drawing-part search result detailed screen 170 via the drawing-part search history screen 200, and performs an operation of selecting the CAD model replacing button 173, the part as a replacement target (part at the time of the search) may not be displayed on CAD. In this case, the CPU 13 displays, on the display 11, a message "open the assembly including the part at the time of the search."

### [All-Part Search Mode]

Description will next be made of a flow of processing when similar parts are retrieved and displayed by executing the all-part search mode. The all-part search mode is executed when the user performs an operation of selecting an executing button 107 displayed on the side of the all-part search comment 103 on the recommender execution selecting screen 100 (see FIG. 4).

When the user performs an operation of selecting the executing button 107, the CPU 13 of the user terminal 3 obtains the model numbers of all parts displayed on CAD, and thereafter accesses the server 4 via the Internet 5 and transmits similar part search data including all of the obtained model numbers. Incidentally, model numbers may be obtained in assembly units constituted of a plurality of parts, rather than in part units. In this case, each part is given a model number common in an assembly unit.

As in the single-part search mode, when the CPU 21 of the server 4 receives the similar part search data, the CPU 21 refers to the similar part data stored in the memory 22, and retrieves all of similar part model numbers associated with the obtained model numbers. The display parts for which similar parts are retrieved are displayed in red. In addition, when model numbers common in assembly units are obtained, as described above, red display is made in assembly units.

When the user performs an operation of selecting a coloration canceling button 109 (see FIG. 4) displayed on the recommender execution selecting screen 100, the red coloration is canceled. Incidentally, determination as to whether or not the obtained model numbers satisfy the above-described predetermined character string format and processing after the determination are performed as in the single-part search mode.

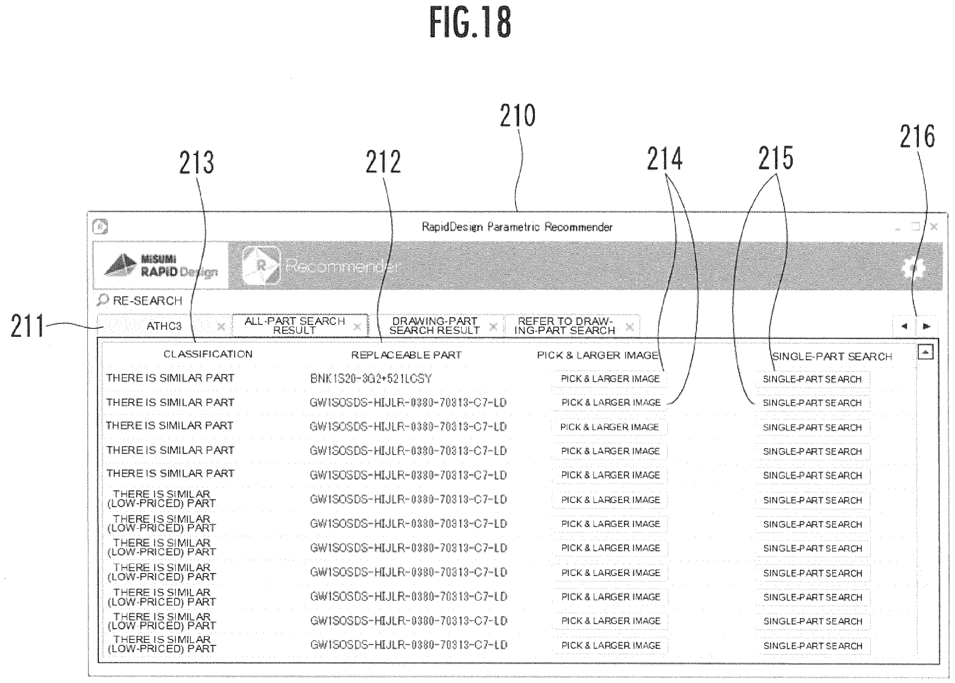

When similar part model numbers are retrieved, data of the retrieved similar part model numbers is transmitted from the server 4 to the user terminal 3. The CPU 13 displays, on the display 11, an all-part search result detailed screen 210 including the retrieved similar part model numbers, as shown in FIG. 18.

The all-part search result detailed screen 210 displays a search target part model number display section 211 displaying the model number of a search target part, a similar part model number section 212 displaying the model numbers of similar parts (substitutable parts), a similar part classification section 213 displaying the classifications of the similar parts, selection and enlarged display buttons 214, single-part search buttons 215, and a left-right scrolling button 216.

The search target part model number display section 211 displays the model number of a search target part. The similar part classification section 213 displays whether similar parts whose model numbers are displayed in the similar part model number section 212 are similar parts or low-priced parts as the classifications of the similar parts.

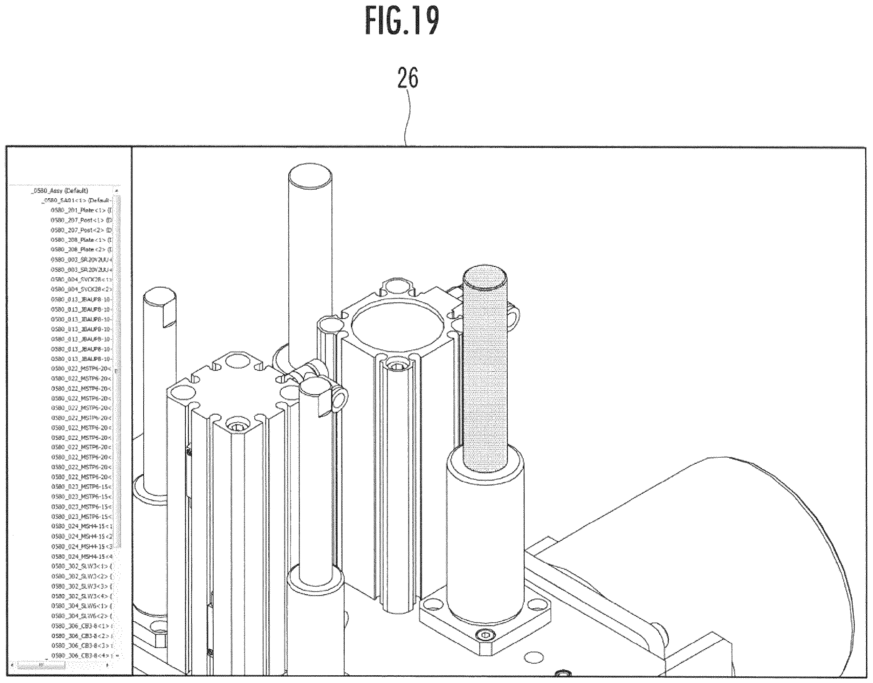

When the user performs an operation of selecting a selection and enlarged display button 214 on the all-part search result detailed screen 210, the CPU 13 sets the corresponding search target part (part hatched in FIG. 19) in a selected state on CAD, and further makes enlarged display with the search target part at a center, as shown in FIG. 19.

When the user performs an operation of selecting a single-part search button 215 on the all-part search result detailed screen 210, the CPU 13 displays, on the display 11, the single-part search result detailed screen 120 (see FIG. 8) of the corresponding search target part. Subsequently, a similar part search in the above-described single-part search mode is performed.

When the user performs an operation of selecting the left-right scrolling button 216 on the all-part search result detailed screen 210, the search target part is changed. At this time, in accordance with the changing of the search target part, the model number displayed on the search target part model number display section 211 is also changed.

### [Second Embodiment]

Description will next be made of a second embodiment of the present invention. In the present second embodiment, the similar part data stored in the memory 22 of the server 4 includes a group model number set to a group that a plurality of similar parts belong, and the group model number is included in the model number of a display part. The similar part group is retrieved at a time of a similar part search. Incidentally, constituent members similar to those of the foregoing embodiment are identified by the same reference numerals, and detailed description thereof will be omitted.

In the single-part search mode, the CPU 13 of the user terminal 3 obtains a portion representing a group model number in an obtained model number, accesses the server 4 via the Internet 5, and transmits similar part search data including the group model number that is obtained (hereinafter referred to as the obtained group model number). For example, in the case where the obtained model number is "ATHC3," "ATHC" representing the group model number is obtained. In this case, the similar part data stored in the memory 22 is provided with a similar part group constituted of a plurality of similar parts including the group model number "ATHC" (for example, similar parts whose model numbers are "ATHC30" and "ATHC3-MB").

When the CPU 21 of the server 4 receives the similar part search data, the CPU 21 refers to the similar part data stored in the memory 22, and retrieves the similar part group including the obtained group model number and constituted of the plurality of similar parts.

When the similar part group is retrieved, data of all of the similar parts within the retrieved similar part group is transmitted from the server 4 to the user terminal 3. Processing similar to that of the first embodiment is thereafter performed.

Also in the all-part search mode, a similar part search using the group model number is performed as in the single-part search mode.

### [Third Embodiment]

A third embodiment of the present invention will next be described. In the single-part search mode, in addition to a similar part search for similar parts to a display part being selected, when there is another display part coupled to the display part being selected, the present third embodiment also performs a similar part search for similar parts to the coupled display part at the same time. In this case, the CPU 13 of the user terminal 3 obtains the model number of one display part being selected and the model number of the display part coupled (hereinafter referred to as the coupled display part) to the display part being selected. Incidentally, determination of the coupled state is made on the basis of the coupled state of the parts on CAD. In addition, constituent members similar to those of the foregoing embodiments are identified by the same reference numerals, and detailed description thereof will be omitted.

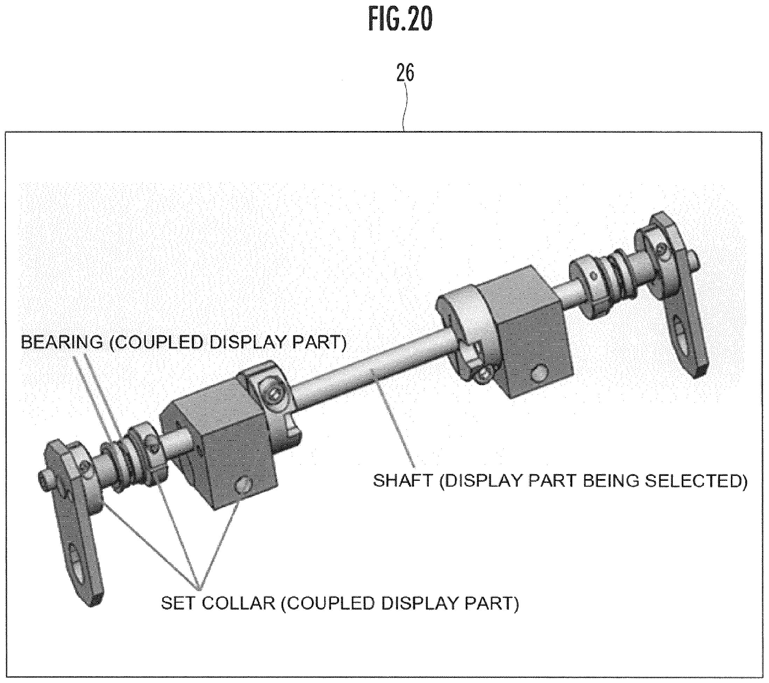

As shown in FIG. 20, when the display part being selected is, for example, a shaft (shaft different from the shaft shown in FIG. 19), the CPU 13 of the user terminal 3 extracts a set collar and a bearing as coupled display parts coupled to the shaft, and obtains respective model numbers thereof. The CPU 13 then makes enlarged display of only the shaft, the set collar, and the bearing, the set collar and the bearing being coupled to the shaft, on the design screen 26.

The CPU 13 of the user terminal 3 accesses the server 4 via the Internet 5, and transmits similar part search data including the obtained model number (model number of the shaft) and the obtained model numbers of the coupled display parts. When the CPU 21 of the server 4 receives the similar part search data, the CPU 21 refers to the similar part data stored in the memory 22, and retrieves similar part model numbers associated with the obtained model number and similar part model numbers associated with the obtained model numbers of the coupled display parts.

When similar part model numbers are retrieved, data of all of the retrieved similar part model numbers is transmitted from the server 4 to the user terminal 3. The CPU 13 displays the received data as a search result detailed screen (not shown) similar to the single-part search result detailed screen 120 (see FIG. 8). In this screen display, it is preferable to display search results for the display part being selected and the extracted coupled display parts, respectively, and allow automatic or manual switching therebetween.

The hole diameter of the set collar and the bearing through which the shaft is inserted (coupled) is determined according to the shaft diameter of the shaft. Therefore, when the shaft is replaced, parts having a hole diameter adjusted to the shaft diameter of the shaft are automatically retrieved and displayed as the set collar and the bearing as in the foregoing embodiments. When only the shaft is replaced, and the set collar and the bearing are not replaced, the state of coupling of the shaft to the set collar and the bearing is not a normal state, so that the shaft cannot be driven normally. It is therefore preferable to set a state in which the user cannot perform other work until the user selects and substitutes a set collar and a bearing corresponding to the shaft after the replacement.

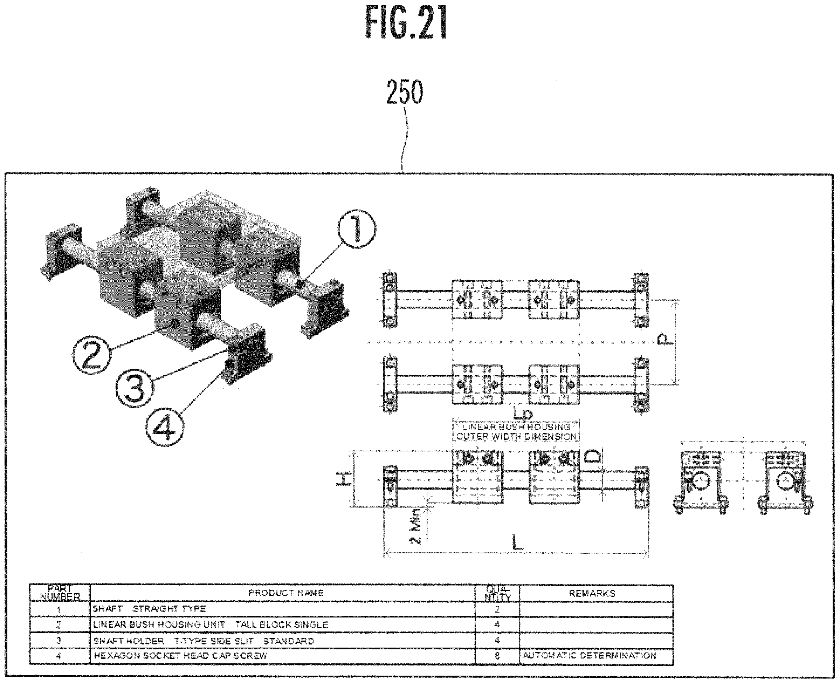

In addition, the display part being selected and the coupled display parts may be extracted as one unit. In a case where the display part being selected is, for example, a shaft (shaft different from the shafts shown in FIG. 19 and FIG. 20), the CPU 13 extracts, as one unit, the shaft as well as a linear bush housing unit, a shaft holder, and a bolt coupled to the shaft, as shown in FIG. 21, and retrieves and displays similar units on a unit-by-unit basis.

The CPU 13 of the user terminal 3 accesses the server 4 via the Internet 5, and transmits similar part search data including the obtained model number (model number of the shaft) and the model numbers of the coupled display parts. When the CPU 21 of the server 4 receives the similar part search data, the CPU 21 refers to the similar part data stored in the memory 22, and retrieves a similar unit having similar part model numbers associated with the obtained model number and the model numbers of the coupled display parts.

Similar unit data is stored on a unit-by-unit basis in the similar part data stored in the memory 22 of the server 4. The similar unit data includes the 3D CAD data of the unit, the 2D CAD data of the unit, the names and usage quantity data of respective parts. The CPU 13 displays the similar unit data as a similar unit display screen 250 on the display 11. Incidentally, also when the linear bush housing unit or the shaft holder is selected, the linear bush housing unit or the shaft holder is extracted as a unit, and a similar unit is retrieved and displayed.

### [Fourth Embodiment]

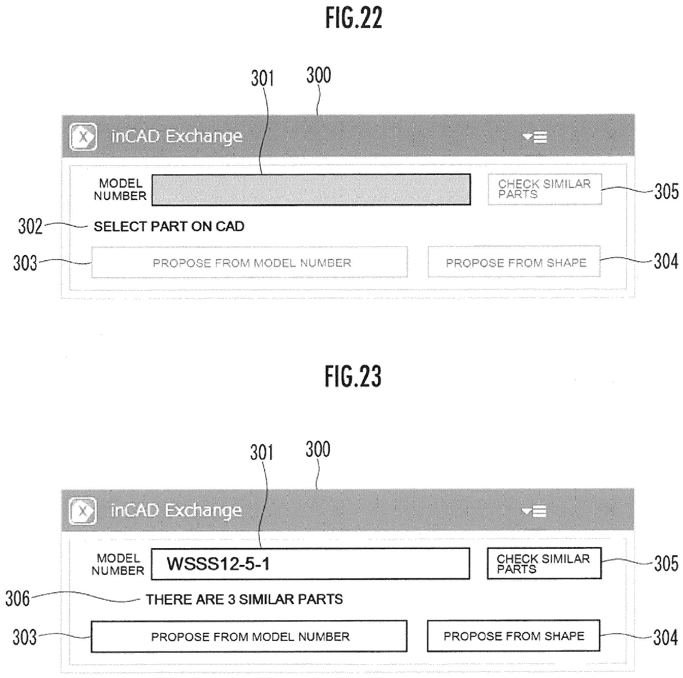

In a fourth embodiment shown in FIGS. 22 to 26, the model number of a part selected on CAD is displayed. Incidentally, constituent members similar to those of the foregoing embodiments are identified by the same reference numerals, and detailed description thereof will be omitted.

As shown in FIG. 22, when the design support program is started, the CPU 13 displays, on the display 11, a recommender execution selecting screen 300 for selecting whether or not to display similar parts to each part displayed on the design screen 26, as design support for each part.

The recommender execution selecting screen 300 displays: a model number display section 301 displaying the model number of one display part selected from among a plurality of display parts displayed on the design screen 26; a message 302 "select part on CAD"; a model number proposing button 303 for proposing similar parts from the model number; a shape proposing button 304 for proposing similar parts from a shape; and a similar part checking button 305 for checking similar parts. Incidentally, in a state (FIG. 22) before selection of one display part, each of the buttons 303 to 305 is not selectable.

Description will be made of a flow of processing when similar parts are retrieved and displayed. The user operates the input unit 12 to select a display part to be set as a similar part search target from among the plurality of display parts displayed on the design screen 26.

As shown in FIG. 23, when the display part is selected, the CPU 13 obtains the model number of the display part being selected, and displays the obtained model number in the model number display section 301 of the recommender execution selecting screen 300. Each of the buttons 303 to 305 becomes selectable when the obtained model number is displayed in the model number display section 301.

When the model number of the display part being selected is obtained, similar parts are retrieved as in the foregoing embodiments, and the CPU 13 displays a message 306 "there are 3 similar parts" on the recommender execution selecting screen 300 on the basis of the number of retrieved similar part model numbers (for example, three). In addition, when the similar part checking button 305 is selected in a state shown in FIG. 23, a table of specifications of the retrieved similar parts is displayed.

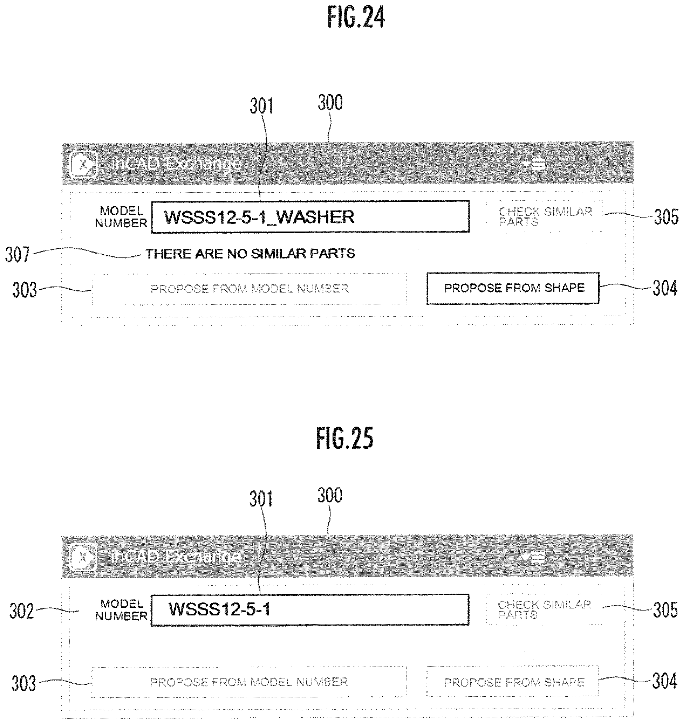

On the other hand, as shown in FIG. 24, in a case where there are no similar parts, the CPU 13 displays a message 307 "there are no similar parts" on the recommender execution selecting screen 300. In this case, there is a strong possibility of it being determined that there are no similar parts because unnecessary information (for example, "_washer") is included in the obtained model number. Incidentally, even in a case where there are no similar parts as a result of a model number search, and the message 307 that "there are no similar parts" is displayed, it is possible to propose similar parts from a shape, and therefore the shape proposing button 304 becomes selectable. When an operation of selecting the shape proposing button 304 is performed, similar parts are retrieved by shape matching as in the foregoing embodiments.

When the unnecessary information is included in the obtained model number, the user deletes the portion of the unnecessary information (_washer) by operating the input unit 12, as shown in FIG. 25.

When the unnecessary information of the obtained model number is deleted, a search for similar parts is performed again, and as shown in FIG. 23, the CPU 13 displays the message 306 "there are 3 similar parts" on the recommender execution selecting screen 300 on the basis of the number of retrieved similar part model numbers (for example, three).

When the user performs an operation of selecting the shape proposing button 304 in the state shown in FIG. 23, the CPU 13 obtains the category of the display part being selected, and transmits category search data including the category data that is obtained (hereinafter referred to as the obtained category data) to the server 4 via the Internet 5. When the CPU 21 of the server 4 receives the category search data, the CPU 21 refers to the similar part data stored in the memory 22, and retrieves similar part category data associated with the obtained category data. In the present embodiment, the CPU 21 corresponds to "a category identifying unit".

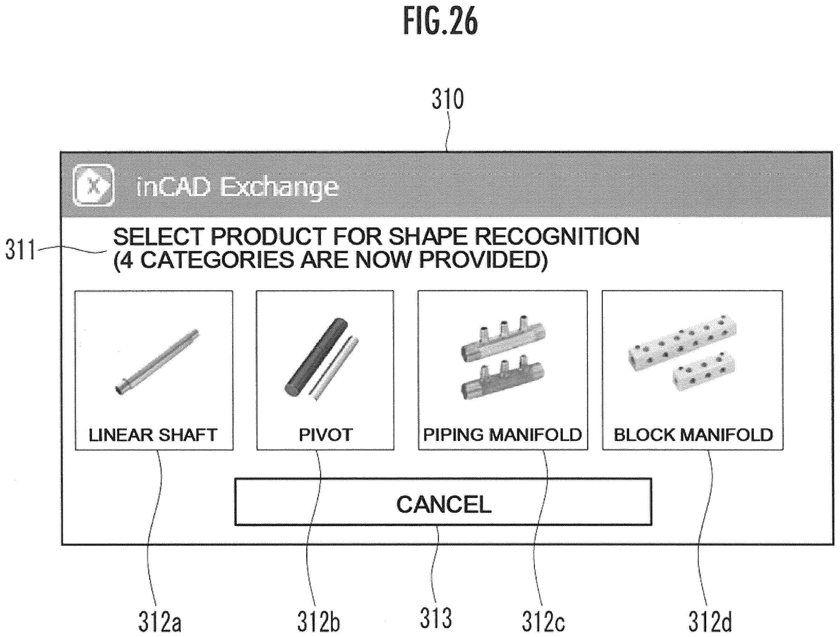

When similar part category data is retrieved, all of the retrieved similar part category data is transmitted from the server 4 to the user terminal 3. Then, as shown in FIG. 26, the CPU 13 displays a category selecting screen 310 displaying all of the similar part category data on the display 11.

The category selecting screen 310 displays a message 311 "select product for shape recognition (4 categories are now provided)," for example, for selecting a category of similar parts to be proposed from a shape, four categories 312a to 312d, and a canceling button 313.

The categories 312a to 312d display the names of the respective categories and images of typical products.

When the user operates the input unit 12 to perform an operation of selecting one of the categories 312a to 312d (category identifying operation), similar parts classified in the selected category (for example, "linear shaft") are retrieved and displayed by shape matching similar to that of the foregoing embodiments.

When the user operates the canceling button 313, the CPU 13 erases the category selecting screen 310, and displays the recommender execution selecting screen 300 in the state shown in FIG. 23 again.

Incidentally, in the above-described fourth embodiment, when a display part is selected, the obtainment of the model number of the selected display part and a similar part search are performed automatically. However, the obtainment of the model number of the selected display part and the similar part search may be performed in response to an operation of selecting the similar part checking button 305 after the selection of the display part by the user (manual search). In this case, when an operation of selecting the similar part checking button 305 is performed, the obtainment of the model number of the selected display part and the similar part search are performed, and the recommender execution selecting screen 300 in the state shown in FIG. 23 is displayed. Incidentally, whether the obtainment of the model number of the selected display part and the similar part search are to be performed manually or automatically may be allowed to be set by the user.

In addition, the category selecting screen 310 may not be displayed on the display 11 when the similar part category data is retrieved. In this case, the CPU 13 retrieves one or a plurality of similar part categories corresponding to the selected display part from all of the similar part category data transmitted from the server 4, and retrieves and displays similar parts classified in the selected category (for example, "linear shaft") by shape matching similar to that of the foregoing embodiments. Incidentally, similar part categories corresponding to each display part are determined in advance.

### [Fifth Embodiment]

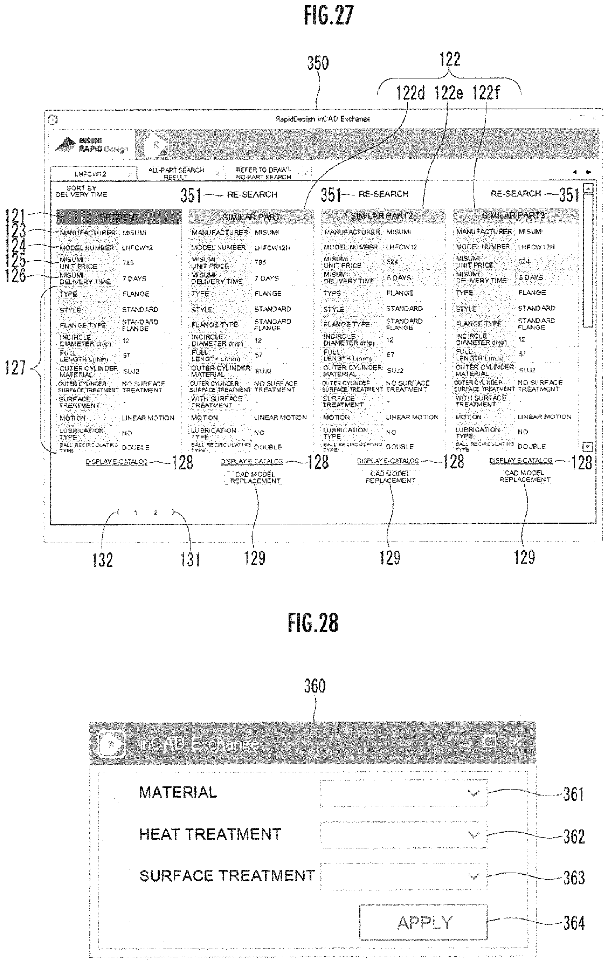

In a fifth embodiment shown in FIG. 27 and FIG. 28, when a re-search for similar parts is performed, the numerical values of specifications indicating part information are changed, and then the re-search is performed. Incidentally, constituent members similar to those of the foregoing embodiments are identified by the same reference numerals, and detailed description thereof will be omitted.

As shown in FIG. 27, in the present embodiment, the CPU 13 displays, on the display 11, a search result detailed screen 350 in place of the single-part search result detailed screen 120 shown in FIG. 8.

As with the single-part search result detailed screen 120, the search result detailed screen 350 displays a present section 121 and a similar part section 122. Each of the sections 121 and 122 displays a manufacturer name item 123, a model number item 124, a unit price item 125, a delivery time item 126, and specification items 127.

When a plurality of similar parts are retrieved, a plurality of (for example, three) similar part sections 122 are provided, and a similar part section 122d, a similar part 2 section 122e, and a similar part 3 section 122f are displayed.

Re-search buttons 351 are displayed above the similar part section 122d, the similar part 2 section 122e, and the similar part 3 section 122f, respectively.

When the user, for example, performs an operation of selecting the re-search button 351 displayed above the similar part 2 section 122e in FIG. 27, the CPU 13 displays a re-search specification setting screen 360 on the display 11, as shown in FIG. 28.

The re-search specification setting screen 360 is provided to set the specifications of the part when a re-search is performed. The re-search specification setting screen 360 changes according to the part as a target of the re-search. For example, in a case where the target of the re-search is a shaft, the re-search specification setting screen 360 displays a material setting section 361 for setting a material, a heat treatment setting section 362 for setting presence or absence and a treatment method of heat treatment, a surface treatment setting section 363 for setting presence or absence and a treatment method of surface treatment, and an applying button 364 for applying information set to each of the setting sections 361 to 363. Incidentally, the number of setting sections can be changed as appropriate.

A pull-down list is set to each of the setting sections 361 to 363 in advance. The material, the presence or absence and treatment method of heat treatment, or the presence or absence and treatment method of surface treatment can be set by selecting a desired list from the pull-down lists.

The user operates the input unit 12 to set a material in the material setting section 361, set the presence or absence and treatment method of heat treatment in the heat treatment setting section 362, set the presence or absence and treatment method of surface treatment in the surface treatment setting section 363, and thereafter perform an operation of selecting the applying button 364.

When an operation of selecting the applying button 364 is performed, the CPU 13 accesses the server 4 via the Internet 5, and transmits similar part search data for making similar parts of an obtained model number retrieved, the similar part search data including data of the obtained model number and data of the set specifications. When the CPU 21 of the server 4 receives the similar part search data, the CPU 21 refers to the similar part data stored in the memory 22, and retrieves the model numbers (similar part model numbers) of similar parts having data associated with the obtained model number and matching the set specification data and further having other data matching specification data displayed in the specification items 127 of the similar part 2 section 122e in FIG. 27.

When similar part model numbers are retrieved, part data of the obtained model number and part data of all of the retrieved similar part model numbers are transmitted from the server 4 to the user terminal 3. The CPU 13 of the user terminal 3 displays a re-search result display screen (not shown) on the display 11 on the basis of the received part data.

The re-search result display screen displayed after the re-search is configured in a manner similar to the search result detailed screen 350. When a plurality of similar parts are retrieved, the re-search result display screen is provided with a plurality of (for example, three) similar part sections 122, and the display order of the similar part section 122d, the similar part 2 section 122e, and the similar part 3 section 122f is different.

The re-search result display screen displays information regarding a re-retrieved similar part (part displayed in the similar part 2 section 122e in FIG. 27) in the similar part section 122d displayed next to the present section 121, and displays information regarding re-retrieved similar parts in the similar part 2 section 122e and the similar part 3 section 122f.

When no similar parts are retrieved by the re-search, the CPU 13 displays a comment "there are no similar parts" (not shown), and thereafter displays the search result detailed screen 350 on the display 11.

### [Sixth Embodiment]

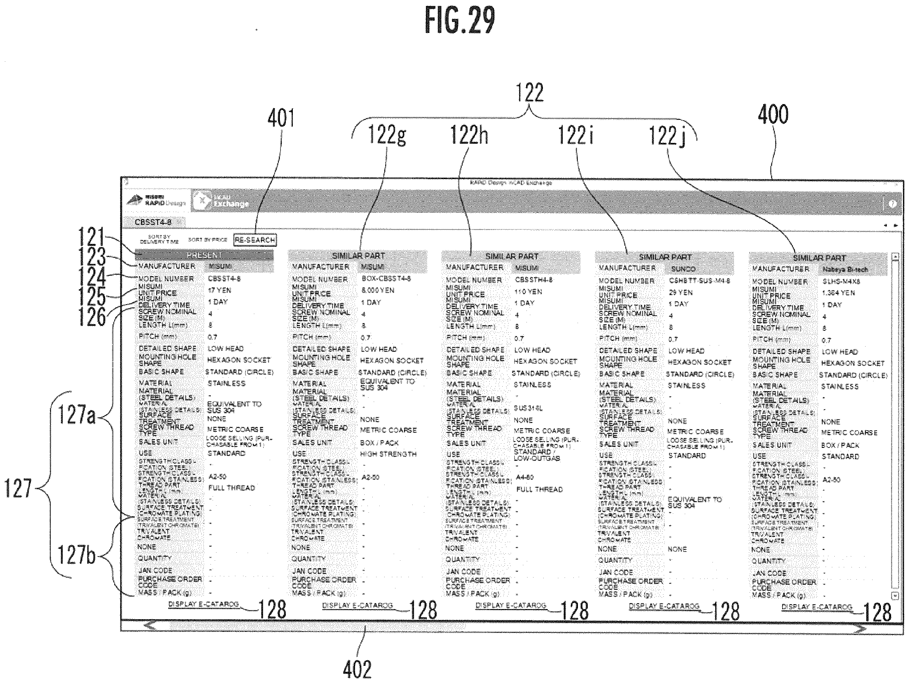

In a sixth embodiment shown in FIG. 29, the CPU 13 displays a search result detailed screen 400 in place of the single-part search result detailed screen 120 (see FIG. 8) on the display 11. Incidentally, constituent members similar to those of the foregoing embodiments are identified by the same reference numerals, and detailed description thereof will be omitted.

As with the single-part search result detailed screen 120, the search result detailed screen 400 displays a present section 121 and a similar part section 122. Each of the sections 121 and 122 displays a manufacturer name item 123, a model number item 124, a unit price item 125, a delivery time item 126, and specification items 127. A re-search button 401 is displayed above the present section 121.

When a plurality of similar parts are retrieved, a plurality of (for example, four) similar part sections 122 are provided, and a similar part section 122g, a similar part 2 section 122h, a similar part 3 section 122i, and a similar part 4 section 122j are displayed.

The specification items 127 include common specification items 127a as items common to the similar part sections 122g to 122j and by-part specification items 127b as items differing between the similar part sections 122g to 122j. Incidentally, in the common specification items 127a, an item whose specification is different from that of the other similar part sections may be displayed in a color different from that of the other items. In addition, in the common specification items 127a, same specification information may be displayed in different characters (for example, stainless steel and SUS304). In this case, it is determined that the same specifications are displayed.

A boundary between the common specification items 127a and the by-part specification items 127b is preferably made distinct. In order to make the boundary distinct, a gap, for example, may be provided between the common specification items 127a and the by-part specification items 127b.

The search result detailed screen 400 can display four similar part sections on the same screen. When there are more than four similar parts, all of similar part sections cannot be displayed on the same screen. The search result detailed screen 400 displays a scrolling button 402 for changing the displayed similar part sections. When the user performs an operation of selecting the scrolling button 402, the CPU 13 scrolls (changes) the displayed similar part sections. Incidentally, even when the similar part sections are scrolled, the present section 121 is displayed in a fixed manner.

For example, in a case where there are eight similar part sections, the CPU 13 displays the present section 121 and the first to fourth similar part sections in an initial state. When the user operates the scrolling button 402 so as to move the scrolling button 402 to a right side, the CPU 13 displays the present section 121 and the fifth to eighth similar part sections. When the user operates the scrolling button 402 so as to move the scrolling button 402 to a left side in this state, the CPU 13 displays the present section 121 and the first to fourth similar part sections.

Incidentally, the foregoing first to sixth embodiments may be combined with one another and carried out within a possible range.

The foregoing embodiments retrieve and display similar parts in a CAD system that displays 3D CAD data. However, similar parts may be retrieved and displayed in a CAD system that displays 2D CAD data.

### [Reference Signs List]

2...Design support system, 3...User terminal, 4...Server, 11...Display, 12...Input unit, 13...CPU, 14...Memory, 21...CPU, 22...Memory, 30...Setting screen, 100...Recommender execution selecting screen, 110...Search execution confirmation screen, 115...Model number setting screen, 120... Single-part search result detailed screen, 136...Re-search screen, 140...Drawing-part search confirmation screen, 150...Confirmation screen, 160...Shape matching part display confirmation screen, 170...Drawing-part search result detailed screen, 180...Narrowed-down screen, 190...Model number following detailed screen, 200...Drawing-part search history screen, 210...All-part search result detailed screen, 250...Similar unit display screen, 300...Recommender execution selecting screen, 301...Model number display section, 303...Model number proposing button, 304...Shape proposing button, 305...Similar part checking button, 310...Category selecting screen, 350...Search result detailed screen, 360...Re-search specification setting screen, 361...Material setting section, 362...Heat treatment setting section, 363...Surface treatment setting section, 364...Applying button, 400...Search result detailed screen, 401...Re-search button, 402...Scrolling button

## Claims

1. A design support system for supporting design using a CAD system, the design support system comprising:
a display unit configured to display a drawing for design according to CAD data;
a similar part database configured to store similar part data associating a model number of a display part that is able to be displayed on the display unit as a part included in the drawing for design with a model number of a similar part to the display part;
an operating input unit to which a selecting operation of selecting the display part included in the drawing for design, the drawing for design being displayed on the display unit, is input;
a model number obtaining unit configured to obtain the model number of the display part selected by the selecting operation input to the operating input unit; and
a similar part search unit configured to search the similar part database for the model number of the similar part corresponding to the model number of the display part, the model number of the display part being obtained by the model number obtaining unit, and displaying, on the display unit, the model number of the similar part, the model number of the similar part being included in a search result.

2. The design support system according to claim 1, wherein
the similar part data further associates the model number of the similar part with a category of the similar part, and
the similar part search unit displays, on the display unit, the category of the similar part, the category of the similar part corresponding to the model number of the similar part, the model number of the similar part being included in the search result, in place of the model number of the similar part or together with the model number of the similar part.

3. The design support system according to claim 1, further comprising:
a shape obtaining unit configured to obtain a shape of the display part selected by the selecting operation input to the operating input unit, wherein
the similar part data further associates the model number of the similar part with a shape of the similar part, and
the similar part search unit searches the similar part database for the shape of the similar part, the shape of the similar part matching the shape of the display part, the shape of the display part being obtained by the shape obtaining unit, and displays, on the display unit, the model number of the similar part, the model number of the similar part corresponding to the shape of the similar part, the shape of the similar part being included in a search result.

4. The design support system according to claim 3, wherein
the similar part data further associates the model number of the similar part with a category of the similar part,
the design support system further comprises a category identifying unit configured to identify the category of the similar part, and
the similar part search unit searches the similar part database for the shape of the similar part, the shape of the similar part matching the shape of the display part, the shape of the display part being obtained by the shape obtaining unit from among shapes of similar parts corresponding to the category of the similar part, the category of the similar part being identified by the category identifying unit, and displays, on the display unit, the model number of the similar part, the model number of the similar part corresponding to the shape of the similar part, the shape of the similar part being included in a search result.

5. The design support system according to claim 4, wherein
a category identifying operation identifying the category of the similar part is further input to the operating input unit, and
the category identifying unit identifies the category of the similar part according to the category identifying operation input to the operating input unit.

6. The design support system according to claim 4, wherein
the similar part database further stores similar part category data associating a category of the display part with the category of the similar part,
the model number obtaining unit obtains the category of the display part selected by the selecting operation input to the operating input unit, and
the category identifying unit searches the similar part database for the category of the similar part, the category of the similar part corresponding to the category of the display part, the category of the display part being obtained by the model number obtaining unit, and identifies the category of the similar part from a search result.

7. The design support system according to claim 1, wherein
the CAD data includes character string data identifying the display part included in the drawing for design, and
for the display part selected by the selecting operation input to the operating input unit, the model number obtaining unit obtains, as the model number of the display part, an extracted character string extracted from the character string data identifying the display part according to a specific rule, and when the extracted character string does not satisfy a character string format that is able to be taken by the model number of the display part, a model number setting screen prompting for setting the character string data is displayed on the display unit.

8. The design support system according to claim 1, wherein
the similar part data associates the model number of the similar part with a plurality of pieces of specification information of the similar part, and
the similar part search unit displays, for each similar part, the plurality of pieces of specification information of the similar part, the plurality of pieces of specification information of the similar part corresponding to the model number of the similar part, the model number of the similar part being included in the search result, alongside names of the plurality of pieces of specification information on the display unit.

9. The design support system according to claim 2, wherein
the similar part data associates the model number of the similar part with a plurality of pieces of specification information of the similar part, and
the similar part search unit displays, for each similar part, the plurality of pieces of specification information of the similar part, the plurality of pieces of specification information of the similar part corresponding to the model number of the similar part, the model number of the similar part being included in the search result, alongside names of the plurality of pieces of specification information on the display unit.

10. The design support system according to claim 3, wherein
the similar part data associates the model number of the similar part with a plurality of pieces of specification information of the similar part, and
the similar part search unit displays, for each similar part, the plurality of pieces of specification information of the similar part, the plurality of pieces of specification information of the similar part corresponding to the model number of the similar part, the model number of the similar part being included in the search result, alongside names of the plurality of pieces of specification information on the display unit.

11. The design support system according to claim 4, wherein
the similar part data associates the model number of the similar part with a plurality of pieces of specification information of the similar part, and
the similar part search unit displays, for each similar part, the plurality of pieces of specification information of the similar part, the plurality of pieces of specification information of the similar part corresponding to the model number of the similar part, the model number of the similar part being included in the search result, alongside names of the plurality of pieces of specification information on the display unit.

12. The design support system according to claim 5, wherein
the similar part data associates the model number of the similar part with a plurality of pieces of specification information of the similar part, and
the similar part search unit displays, for each similar part, the plurality of pieces of specification information of the similar part, the plurality of pieces of specification information of the similar part corresponding to the model number of the similar part, the model number of the similar part being included in the search result, alongside names of the plurality of pieces of specification information on the display unit.

13. The design support system according to claim 6, wherein
the similar part data associates the model number of the similar part with a plurality of pieces of specification information of the similar part, and
the similar part search unit displays, for each similar part, the plurality of pieces of specification information of the similar part, the plurality of pieces of specification information of the similar part corresponding to the model number of the similar part, the model number of the similar part being included in the search result, alongside names of the plurality of pieces of specification information on the display unit.

14. The design support system according to claim 1, further comprising:
a similar part selecting operating input unit to which a similar part selecting operation of selecting the model number of the similar part is input, the model number of the similar part being included in the search result of the similar part search unit and being displayed on the display unit; and
a replacing unit configured to replace, on the CAD data, the display part selected by the selecting operation input to the operating input unit with the similar part corresponding to the model number selected by the similar part selecting operation input to the similar part selecting operating input unit.

15. The design support system according to claim 1, wherein
the model number obtaining unit obtains model numbers of all display parts included in the drawing for design, the drawing for design being displayed on the display unit, and
the similar part search unit searches the similar part database for model numbers of similar parts corresponding to the model numbers of all of the display parts, the model numbers of all of the display parts being obtained by the model number obtaining unit, and displays, on the display unit, the model numbers of the similar parts, the model numbers of the similar parts being included in a search result.

16. The design support system according to claim 1, wherein
when the display part selected by the selecting operation input to the operating input unit is a coupled part, the model number obtaining unit obtains the model number of the display part and a model number of another display part coupled to the display part, and displays the model number of the display part and the model number of the other display part on the display unit.

17. The design support system according to claim 1, wherein
when the similar part search unit performs a search with respect to the same display part, the similar part search unit changes numerical values of a plurality of specifications indicating part information, and performs a re-search.
